Europäisches Patentamt

European Patent Office

Office européen des brevets

(11) Veröffentlichungsnummer : **0 326 017 B1**

(12) **EUROPÄISCHE PATENTSCHRIFT**

(19)

(45) Veröffentlichungstag der Patentschrift :
**15.04.92 Patentblatt 92/16**

(21) Anmeldenummer : **89100864.1**

(22) Anmeldetag : **19.01.89**

(51) Int. Cl.⁵ : **G01G 21/24,** G01G 3/14,
G01L 1/22

(54) **Kraftmesselement für eine Waage.**

Verbunden mit 89901465.8/0397728
(europäische
Anmeldenummer/Veröffentlichungsnummer)
durch Entscheidung vom 23.04.91.

(30) Priorität : **26.01.88 DE 3802153**

(43) Veröffentlichungstag der Anmeldung :
**02.08.89 Patentblatt 89/31**

(45) Bekanntmachung des Hinweises auf die
Patenterteilung :
**15.04.92 Patentblatt 92/16**

(84) Benannte Vertragsstaaten :
**ES FR GB IT SE**

(56) Entgegenhaltungen :
**EP-A- 0 060 766**

(56) Entgegenhaltungen :
**EP-A- 0 071 578
EP-A- 0 080 702
WO-A-83/00222
GB-A- 2 149 131
PATENT ABSTRACTS OF JAPAN, Band 11, Nr.
207 (P-592)[2654], 4. Juli 1987 ; & JP-A-62 27 623
(EE & D K.K.) 05-02-1987**

(73) Patentinhaber : **SOEHNLE-WAAGEN GMBH &
CO.
Fornsbacher Strasse 27-35
W-7157 Murrhardt (DE)**

(72) Erfinder : **Schurr, Michael, Ing. grad.
Justinus-Kerner-Strasse 67
W-7157 Murrhardt (DE)**

(74) Vertreter : **Dreiss, Hosenthien & Fuhlendorf
Gerokstrasse 6
W-7000 Stuttgart 1 (DE)**

EP 0 326 017 B1

## Beschreibung

Die Erfindung betrifft ein Kraftmeßelement für eine Waage, gebildet durch einen an seinem einen Ende die Last aufnehmenden Balken mit einer waagerecht verlaufenden Ausnehmung, auf deren Ober- und Unterseite sich durch ausgeprägt verringerte und gleiche Materialquerschnitte Biegestellen derart ausbilden, daß sich zwischen den Biegestellen des Balkens zwei Lenker einer Parallelführung ergeben, und bei dem das Meßsignal durch Dehnungsmeßstreifen an den Biegestellen abgeleitet wird.

Ein Kraftmeßelement dieser Art ist aus der EP-A- 0 227 850 bekannt.

Nachteilig ist, daß die Biegestellen eines Lenkers unterschiedlich beansprucht sind, weil sich den Biegemomenten der einzelnen Lenker das Biegemoment des ganzen Balkens überlagert. Um dies auszugleichen, ist es bekannt, die Materialquerschnitte an den Biegestellen unterschiedlich auszubilden (EP-A2- 0 207 240). Es ist auch bekannt, die Linearität eines solchen Kraftmeßelementes durch die besondere Anordnung einer Verbindungsstange swischen einem Lenker und einer Meßzelle zu verbessern (DE-A- 32 39 002).

Nachteilig bei den benannten Kraftmeßelementen ist, daß bei großer Nenlast sich das abgeleitete Meßsignal stark verändert,wenn sich der Angriffspunkt der Last in Längsrichtung eines Balkens auch nur geringfügig - schon im Bereich von nur 1/10 eines Millimeters - ändert, wie sich dies z.B. durch Abnutzung ergeben kann.

Aus der EP-A2-0 080 702 ist ein Kraftmeßelement für eine Waage bekannt, das zwei aus einem einstückigen Block gearbeitete Parallelogrammlenker aufweist, zwischen denen mittig ein Biegemeßkörper vorgesehen ist. Mit den Parallelogrammlenkern verbunden sind zwei jeweils mit einem stufenförmigen Vorsprung versehene Stege. Einer dieser beiden Stege ist mit dem Biegemeßkörper, der an dem anderen Steg angebracht ist, über eine Krafteinleitunseinheit verbunden, die durch eine Druckstelze gebildet wird, die einerseits in dem genannten einen Steg und andererseits in dem Biegemeßkörper beweglich gelagert ist. Für die Aufbringung der zu wägenden Last ist an dem Steg eine Lastplatte so befestigt, daß ihr Flächenmittelpunkt auf der Mittelebene zwischen den Parallelogrammlenkern und in der Mitte zwischen den Gelenkstellen der Parallelogrammlenker liegt. Auf diese Weise Weise soll gewährleistet sein, daß die Krafteinleitung in den tatsächlichen Flächenschwerpunkt der beiden Parallelogrammlenker erfolgt. Diese Konstruktion soll einen möglichst niederen Aufbau gewährleisten, bei dem die Dehnungselemente einfach aufgebracht und abgekapselt werden können. Durch die Notwendigkeit einer speziellen Krafteinleitungseinheit ist diese Anordnung aber doch noch zu kompliziert.

Bei der GB-A- 2 149 131 sind zwei je durch vier Stäbe gebildete Parallellenker beidseitig, vorzugsweise symmetrisch, eines Stabes angeordnet, der der Krafteinleitung dient und demgemäß sich nur linear verschieben kann. Auch der dort gezeigte Mechanismus ist vergleichsweise aufwendig. Auf das Problem, daß sich der Angriffspunkt der Last am Kraftmeßelement infolge der Tatsache, daß er lediglich aufsitzt, verschieben kann, geht die genannte Druckschrift nicht ein.

Aufgabe der Erfindung ist es, ein Kraftmeßelement der eingangs genannten Art derart weiterzubilden, daß die Empfindlichkeit gegenüber Veränderungen des Angriffspunktes der Last reduziert bzw. eliminiert wird.

Erfindungsgemäß wird diese Aufgabe dadurch gelöst, daß die Dehnungsmeßstreifen an den Biegestellen des einen Lenkers angeordnet sind und der andere Lenker zwischen den Biegestellen einen Absatz aufweist, an dem sich der äußere Querschnitt des Balkens erweitert, wobei die Mittellinien im Materialquerschnitt der diesen Lenker bildenden Biegestellen um einen bestimmten Betrag gegeneinander versetzt sind.

Dieser Versatz der Mittellinien des Materialquerschnitts an den Biegestellen durch Vergrößerung des äußeren Querschnitts der bzw. des Balkens ergibt sich als Folge des den äußeren Querschnitt eines Balkens erhöhenden Absatzes unter der Voraussetzung, daß an den Biegestellen die Abstände der äußeren Flächen der Balken von dem Durchbruch gleich groß sein müssen. Bei Belastung entsteht durch den Versatz ein zusätzliches Dehmoment, das die Biegestellen mit einem zusätzlichen Biegemoment belastet. Dieses kann durch entsprechende Dimensionierung so bestimmt werden, daß eine gewisse Auslenkung des Angriffspunktes der Last an dem Balken zu keiner wahrnehmbaren Veränderung des abgeleiteten Meßsignals mehr führt.

Eine Weiterbildung der Erfindung sieht vor, daß das Kraftmeßelement durch drei mittels eines Querbalkens E-förmig miteinander verbundene Balken gebildet wird, und daß die Befestigung des Kraftmeßelementes an einer Konsole an den freien Enden der äußeren Balken und die Lastaufnahme am freien Ende des mittleren Balkens erfolgt. Daraus ergibt sich - bei der Ausbildung der Balken durch je 2 Lenker als Parallelführung - der Vorteil, daß die Ebene der Krafteinwirkung durch eine Last auch bei Auslenkung des belasteten mittleren Balkens stets dieselbe bleibt. Dadurch wird die Linearität erheblich verbessert.

Ausführungsbeispiele der Erfindung werden im folgenden anhand der beigefügten Zeichnungen näher beschrieben. Es stellen dar:

Figur 1 der schematische Aufbau einer Waage mit einem erfindungsgemäßen Kraftmeßelement;

Figur 2 eine perspektivische Darstellung des Kraftmeßelements;

Figur 3 einen Schnitt entlang III-III in Fig. 2;

Figur 4 eine Darstellung der Verbiegung zweier Balken des Krafmeßelementes bei Belastung;

Figur 5 eine Ansicht des Ausführungsbeispiels nach Fig. 2 in Richtung der Pfeile V-V;

Figur 6 ein modifiziertes Ausführungsbeispiel in Darstellung entsprechend Fig. 5;

Figur 7 ein weiteres Ausführungsbeispiel.

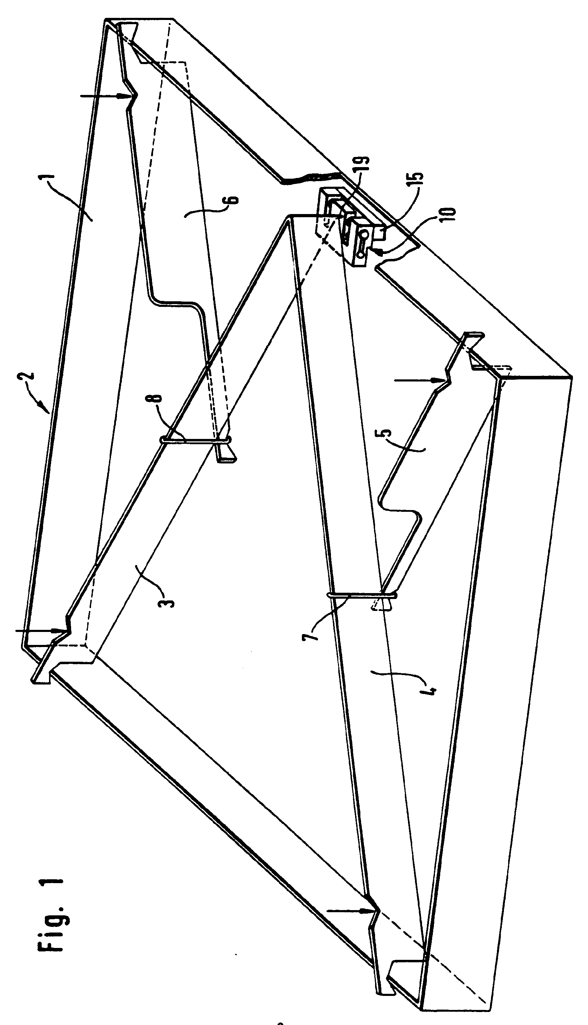

Figur 1 zeigt schematisch den Aufbau einer Waage. Am Rand 1 eines Kastens 2 sind vier Hebel 3, 4, 5, 6 eingehängt, wobei die Hebel 5 und 6 mittels je eines Gehänges 7, 8 an den Hebeln 3, 4 etwa an deren Mitte angreifen. Die Hebel 3, 4 sind an ihrem freien Ende miteinander verbunden und tragen dort einen Stift 19, der auf das Kraftmeßelement 10 einwirkt. Die Hebel 3 bis 6 werden an den mit Pfeilen bezeichneten Stellen ihrerseits von einer (nicht gezeigten) Platte her über Schneide und Pfanne belastet.

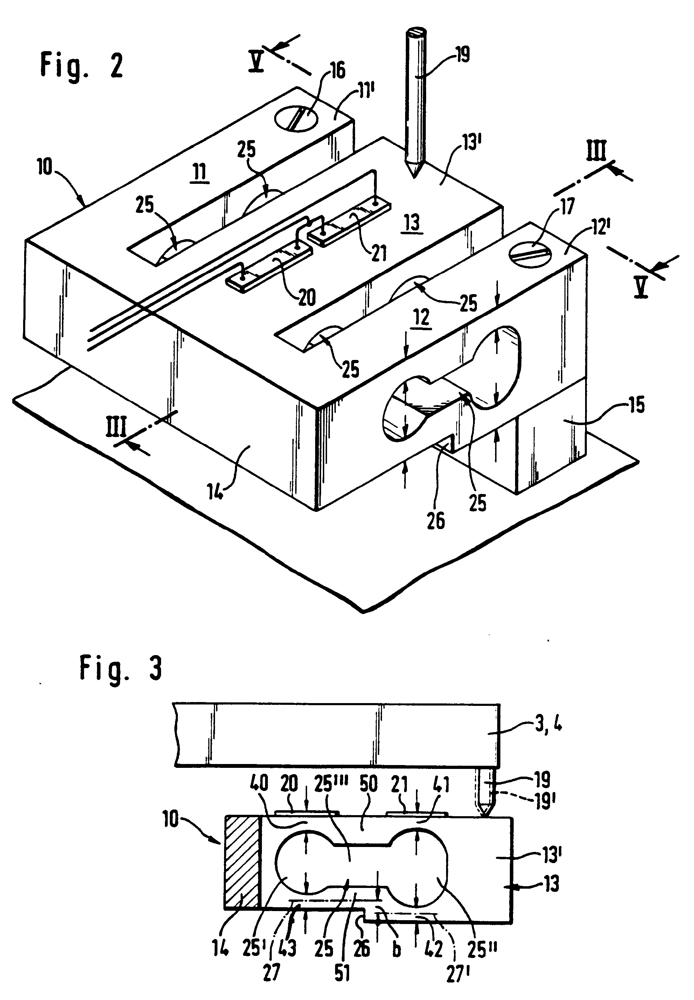

Figur 2 zeigt das Kraftmeßelement 10. Es wird durch zwei äußere Balken 11, 12 und einen inneren Balken 13 gebildet, die parallel zueinander angeordnet, gleich lang und miteinander über einen senkrecht zu ihnen verlaufenden Querbalken 14 verbunden sind. Die Form ist in Draufsicht E-förmig. Die beiden äußeren Balken 11, 12 sind mit ihren Enden 11′, 12′ auf einer Konsole 15 mittels Schrauben 16 bzw. 17 befestigt. Das Kraftmeßelement 10 nimmt die Last durch den Stift 19 auf, der mit den Hebeln 3 und 4 an deren vorderer Verbindung verbunden ist.

Wie aus Figur 3 ersichtlich, sind die Balken 11, 12, 13 je mit einem Durchbruch 25 versehen. Dieser wird im wesentlichen durch den kreisförmigen Bereich 25′ und den ovalen Bereich 25″ gebildet, die miteinander über einen im Querschnitt rechteckigen Bereich 25‴ verbunden sind. Die Bereiche 25′ und 25″ haben gleiche Radien. Es entstehen also durch ausgeprägt verringerte Materialquerschnitte Biegestellen 40, 41, 42, 43. Die Materialquerschnitte der Biegestellen 40 bis 43 sind, wie durch die Pfeile verdeutlicht, jeweils gleich. Zwischen diesen Biegestellen bilden sich Lenker 50, 51 einer Parallelführung aus.

Bei Verformung unter Last bilden sich in jedem Balken in den Lenkern 50, 51 an den Biegestellen 40, 41, 42, 43 Druckzonen und Zugzonen aus. An den Biegestellen 40, 41 auf der Oberseite des Lenkers 50 sind zwei Dehnungsmeßstreifen 20, 21 angeordnet, und zwar der Dehnungsmeßstreifen 20 in einer Zugzone und der Dehnungsmeßstreifen 21 in einer Druckzone. Die beiden Dehnungsmeßstreifen werden zusammen mit Ergänzungswiderständen als Wheatstone'sche Brücke geschaltet, die im nicht belastetem Zustand abgeglichen ist und bei der sich bei Verstimmung durch Belastung die in den Dehnungsmeßstreifen entstehenden Meßsignale addieren.

Bei Benutzung kann sich der Angriffspunkt des Stiftes 19 auf dem rechten Ende 13′ des Balkens 13, wie in Fig. 3 gestrichelt bei 19′ eingezeichnet, verschieben. Eine solche Verschiebung im Bereich von nur 1/10 mm kann sich ohne weiteres durch Abnutzung ergeben. Daraus folgt bei Anordnung von nur zwei Dehnungsmeßstreifen 20 und 21 auf der Oberseite des Lenkers 50 des Balkens 13 eine Änderung des aus diesen abgeleiteten Meßsignals. Diese Änderungen in den Dehnungsmeßstreifen 20 und 21 sind unsymmetrisch, d.h., bei einer Auslenkung sind die Signaländerungen nicht dem Betrag nach gleich.

Um dem abzuhelfen, ist beim Ausführungsbeispiel nach Fig. 1 bis 5, an der Unterseite des unteren Lenkers 51 ein Absatz 26 vorgesehen, durch den der äußere Querschnitt des Balkens vergrößert wird, und zwar derart, daß das Ende 13′, auf welches die Last mittels des Stiftes 19 einwirkt, den größeren Querschnitt aufweist. Daraus folgt, daß die Mittellinien 27, 27′ der Materialquerschnitte an den Biegestellen 42 bis 43 gegeneinander um den Betrag b versetzt sind. Entsprechend sind die Balken 11 und 12 ausgebildet. Da die beiden Mittellinien 27, 27′ gegeneinander um den Betrag b versetzt sind, knickt der druckbelastete untere Lenker 51 etwas aus. Dadurch werden die unteren Biegestellen 42, 43 mit einem zusätzlichen Biegemoment belastet. Durch geschickte Wahl des Versatzes b kann erreicht werden, daß eine gewisse Auslenkung des Angriffspunktes der Spitze des Stiftes 19 in Längsrichtung des Balkens zu keiner wahrnehmbaren Veränderung des Meßsignals mehr führt.

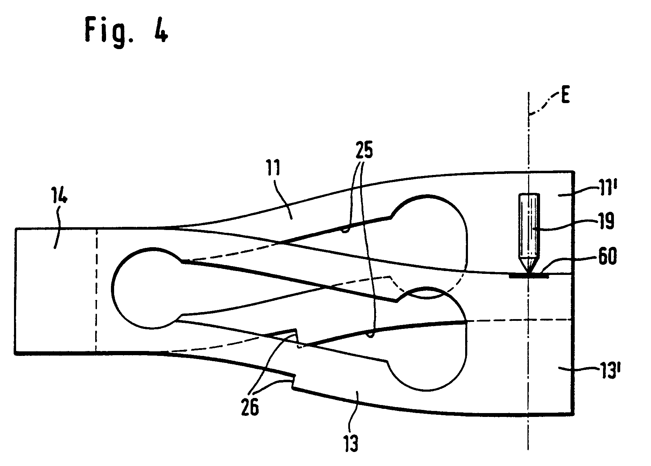

Wie aus Fig. 4 ersichtlich, ergibt sich aus dieser Ausbildung der einzelnen Balken in Kombination mit der E-förmigen Anordnung von drei Balken 11, 12, 13 noch ein weiterer Vorteil: Die Ebene E, in der der Stift 19 liegt, verändert sich bei Auslenkung des mittleren die Last aufnehmenden Balkens 13 nicht. Damit wird die Linearität des abgeleiteten Meßsignals erheblich verbessert. Außerdem ergibt sich bei der E-förmigen Ausbildung in Kombination mit der Ausbildung der einzelnen Balken als 2-Lenker-Parallelführung, daß der unterhalb der Spitze 19 etwas dicker eingezeichnete Bereich 60 stets exakt waagerecht liegt.

Gegenüber bekannten Wägezellen, die lediglich durch einen Balken mit einseitiger Krafteinleitung und Befestigung am anderen Ende gebildet werden, ergibt sich bei der E-förmigen Drehbalkenanordnung nach Fig. 2 ein doppelter Meßweg dadurch, daß die beiden äußeren Balken 11, 12 zusammen dieselbe Breite haben, wie der mittlere Balken 13 und sich deshalb bei Belastung genauso stark durchbiegen wie dieser. Es ergibt sich ferner eine geringe Bauhöhe und daß Krafteinleitung und Befestigung nahe beieinander liegen.

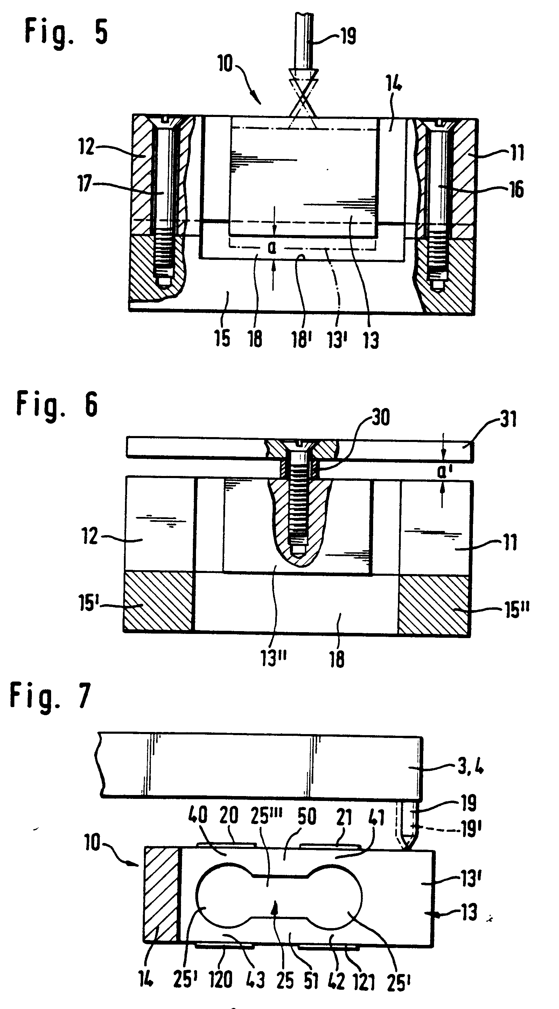

Die Figur 5 zeigt eine Überlastsicherung dadurch, daß die beiden äußeren Balken 11, 12 auf einer Konsole 15 angeordnet sind, die innerhalb des inneren Balkens 13 eine Ausnehmung 18 aufweist, deren obere Fläche 18′ soweit eingeschnitten ist, daß sich der innere Balken 13 in gewünschtem Ausmaß auslenken kann und bei einer definierten Last, entsprechend einer definierten Auslenkung, auf die obere Fläche 18′ auftrifft. Mit a ist die Tiefe des Einschnittes der Ausnehmung 18 im inneren Balken 13 bezeichnet.

Eine Modifikation mit einer etwas anderen Ausbildung des Überlastanschlages zeigt Fig. 6. Dabei wird der Überlastanschlag durch eine Anschlagplatte 31 gebildet, die auf dem inneren Balken 13 mittels der Distanzhülse 30 in einem gewissen Abstand a′ von der Oberseite des inneren Balkens 13 angeordnet ist und seitlich die äußeren Balken 11, 12 übergreift. Bei Belastung mit einer vorbestimmten Last, bei der der Überlastanschlag erreicht sein soll, sitzen die beiden äußeren Enden auf den äußeren Balken 11, 12 auf und verhindern damit eine Auslenkung.

Figur 7 zeigt eine zweite Lösung der der Erfindung zugrundeliegenden Aufgabe. Bei dem Ausführungsbeispiel nach Fig. 7 ist auf die Ausbildung des Absatzes 26 auf der Unterseite des unteren Lenkers 51 verzichtet. Anstatt dessen sind auch auf der Unterseite Dehnmeßstreifen 120 bzw. 121 vorgesehen. Diese können dann zusammen mit den beiden oberen Dehnmeßstreifen 20, 21 so in Form einer Brücke verschaltet werden, daß die durch Verschiebung des Angriffspunktes 19 der Last - etwa in Folge Abnützung - entstehenden Unsymmetrien in den Änderungen des Meßsignals in den Dehnmeßstreifen 20, 21 durch entsprechende Änderungen in den Dehnmeßstreifen 120, 121 ausgeglichen werden.

Bei dieser Ausbildung ist die Ausnehmung 25 symmetrisch gestaltet, d.h. sie besteht aus zwei gleich großen kreisförmigen Ausnehmungen 25′ und dazwischen einer rechteckigen Ausnehmung 25″. Auch bei dieser Ausbildung kann man den gesamten Block E-förmig ausbilden, wie in Fig. 2 gezeigt. Es ist jedoch günstiger, das Ausführungsbeispiel nach den Fig. 1 bis 5 (einschließlich der Modifikation nach Fig. 6) zu wählen, dadurch die Ausbildung des gesamten E-förmigen Blocks aus einem Strangpreßprofil das Anbringen des Absatzes 26 sehr viel einfacher und billiger ist als die Verwendung zweier weiterer Dehnmeßstreifen.

Insgesamt entsteht also durch die Erfindung, einschließlich ihrer vorteilhaften Weiterbildungen, eine Kraftmeßzelle mit optimalen Eigenschaften. Man kann sie so auslegen, daß sie schon bei geringen Lasten von z.B. 1 oder 2 kg eingesetzt werden kann.

## Patentansprüche

1. Kraftmeßelement für eine Waage, gebildet durch einen an seinem einen Ende die Last aufnehmenden Balken mit einer waagerecht verlaufenden Ausnehmung, auf deren Ober- und Unterseite sich durch ausgeprägt verringerte und gleiche Materialquerschnitte Biegestellen derart ausbilden, daß sich zwischen den Biegestellen des Balkens zwei Lenker einer Parallelführung ergeben und bei dem das Meßsignal durch Dehnungsmeßstreifen an den Biegestellen abgeleitet wird, **dadurch gekennzeichnet**, daß die Dehnungsmeßstreifen (20,21) an den Biegestellen (40,41) des einen Lenkers (50) angeordnet sind und der andere Lenker (51) zwischen den Biegestellen (42,43) einen Absatz (26) aufweist, an dem sich der äußere Querschnitt des Balkens erweitert, wobei die Mittellinien (27,27′) im Materialquerschnitt der diesen Lenker (51) bildenden Biegestellen (43,42) um einen bestimmten Betrag (b) gegeneinander versetzt sind.

2. Kraftmeßelement nach Anspruch 1 dadurch gekennzeichnet, daß es durch drei mittels eines Querbalkens (14) E-förmig, miteinander verbundene je durch eine Ausnehmung (25) eine Parallelführung bildende Balken (11, 12, 13) gebildet wird, und daß die Befestigung des Kraftmeßelementes an einer Konsole (15) an den freien Enden (11′, 12′) der beiden äußeren Balken und die Lastaufnahme am freien Ende (13′) des mittleren (13) Balkens erfolgt.

3. Kraftmeßelement nach Anspruch 2, dadurch gekennzeichnet, daß die beiden äußeren Balken (11,12) auf einer Konsole (15) angeordnet sind,die im Bereich unterhalb des inneren Balkens (13) eine Ausnehmung (18) aufweist, deren obere Fläche (18') soweit eingeschnitten ist, daß sie ein Überlastanschlag für den inneren Balken (13) ist.

4. Kraftmeßelement nach Anspruch 2, dadurch gekennzeichnet, daß ein Überlastanschlag durch eine Anschlagplatte (31) gebildet wird, die auf dem inneren Balken (13) im Abstand (a′) von dessen Oberseite angeordnet ist und seitlich die äußeren Balken (11,12) übergreift.

## Claims

1. A force measuring element for a weighing apparatus, comprising a beam which takes the load on one of its ends and which has a horizontal bore, on the upper and lower sides of which bending points are formed by shaped narrowed and equal material cross-sections; between the bending points of the beam two arms of a parallel guide being formed and the measuring signal being led off the bending points by means of stretch measuring strips, characterised in that the stretch measuring strips (20,21) are arranged on the bending points (40,41) of one arm (50) and the other arm (51) is provided between the beding points (42,43) with a portion (26) at which the outer corss-section of the beam is enlarged, such that the mid-lines (27,27') in the material cross-sections of the bending points (43,42) forming this arm (51) are seperated by a pre-determined amount (b).

2. Force measuring element as claimed in Claim 2, characterised in that it is formed from three beams (11,12,13) connected together by a cross-beam (14) in a E-shape, each beam having a bore (25) forming a parallel guide, the element being secured to a console (15) at the free ends (11',12') of the outer beams and the load being applied to the free end (13') of the middle beam.

3. Force measuring element as claimed in Claim 2, characterised in that the two outer beams (11,12) are arranged on a console (15) which has a depression (18) in the region underneath the inner beam (13), the upper surface (18') of the depression (10) being located sufficiently deep that the inner beam (13) can bend under load until it meets the upper surface (18') at a given load.

4. Force measuring element as claimed in Claim 2, characterised in that an abutment plate (31) is fixed to and spaced by an amount (a') from the inner beam (13), the plate (31) extending laterally to positions above the outer beams (11,12).

## Revendications

1. Elément de mesure pour un dispositif de pesage, formé par un fléau recevant la charge à l'une de ses extrémités et comportant un évidement s'étendant horizontalement sur le côté inférieur et supérieur duquel se constituent des points de flexion sous l'effet de réductions nettes et identiques de la section transversale du matériau de telle sorte qu'entre lesdits points de flexion du fléau se constituent deux branches d'un parallélogramme tandis que le signal de mesure est prélevé sur lesdits points de flexion au moyen de bandes mesurant la dilatation, caractérisé par le fait que les bandes (20, 21) mesurant la dilatation sont disposées sur les points de flexion (40, 41) de l'une des branches (50) et que l'autre branche (51) présente entre les points de flexion (42, 43) un gradin (26) sur lequel la section transversale extérieure du fléau s'élargit, tandis que dans la section transversale du matériau des points de flexion (43, 42) qui forment cette branche (51) les lignes médianes (27, 27') sont décalées l'une par rapport à l'autre dans une proportion déterminée (b).

2. Elément de mesure selon la revendication 1, caractérisé par le fait qu'il est constitué par trois fléaux (11, 12, 13) formant chacun un parallélogramme sous l'effet d'un évidement (25) et reliés entre eux de manière à former un E au moyen d'un fléau transversal (14), et par le fait que la fixation de l'élément de mesure s'effectue sur une console (15) aux extrémités libres (11', 12') des deux fléaux extérieurs et que la prise de la charge a lieu sur l'extrémité libre (13') du fléau central (13).

3. Elément de mesure selon la revendication 2, caractérisé par le fait que les deux fléaux extérieurs (11, 12) sont disposés sur une console (15) laquelle présente sous le fléau intérieur (13) un évidement (18) dont la face supérieure (18') est incisée sur une distance telle qu'elle constitue une butée de surcharge pour le fléau intérieur (13).

4. Elément de mesure selon la revendication 2, caractérisé par le fait qu'une butée de surcharge est formée par une plaque de butée (31) laquelle est disposée sur le fléau intérieur (13) à une distance (a') de son côté supérieur et saisit latéralement les fléaux extérieurs (11, 12).

Fig. 1

Fig. 2

Fig. 3

# Fig. 4

# Fig. 5

# Fig. 6

# Fig. 7

9